(19) Europäisches Patentamt
European Patent Office
Office européen des brevets

(11) Veröffentlichungsnummer: **0 282 912**
**A2**

(12) **EUROPÄISCHE PATENTANMELDUNG**

(21) Anmeldenummer: **88103790.7**

(22) Anmeldetag: **10.03.88**

(51) Int. Cl.[4]: **C08K 5/00** , C08L 27/06 , //(C08K5/00,5:05,5:09,5:34)

(30) Priorität: **18.03.87 DE 3708711**

(43) Veröffentlichungstag der Anmeldung: **21.09.88 Patentblatt 88/38**

(84) Benannte Vertragsstaaten: **BE DE FR GB IT**

(71) Anmelder: **BASF Lacke + Farben Aktiengesellschaft**
**Max-Winkelmann-Strasse 80**
**D-4400 Münster(DE)**

(72) Erfinder: **Marx, Gerhard**
**Marabustrasse 26**
**D-7000 Stuttgart(DE)**

(74) Vertreter: **Wurzler, Hartmut, Dr. et al**
**i.Fa. BASF Aktiengesellschaft**
**Carl-Bosch-Strasse 38**
**D-6700 Ludwigshafen(DE)**

(54) **Stabilisierungsmittel für Vinylchloridpolymerisate.**

(57) Stabilisierungsmittel für Vinylchloridpolymerisate, bestehend in wesentlichen aus

A) 20 bis 70 Gew.-% einer Mischung aus einem Zinksalz und einem Erdalkalimetallsalz einer aliphatischen, aromatischen oder araliphatischen $C_7$-$C_{18}$-Carbonsäure, wobei das Verhältnis von Zinksalz zu Erdalkalimetallsalz 1:1 bis 2,5:1 beträgt,

B) 25 bis 50 Gew.-% eines Isocyanurates

und

C) 5 bis 30 Gew.-% eines 3-bis 6-wertigen, nicht aromatischen Alkohols mit bis zu 10 C-Atomen, ausgenommen Derivate des Isocyanurates, oder von Homokondensationsprodukten dieser Alkohole oder von Cokondensationsprodukten dieser Alkohole untereinander oder mit aliphatischen $C_2$-$C_6$-Dicarbonsäuren oder aromatischen $C_8$-Dicarbonsäuren, wobei der Kondensationsgrad bis zu 10 beträgt und mindestens zwei freie Hydroxylgruppen vorhanden sind, oder partielle Ester dieser Alkohole bzw. der Kondensationsprodukte mit aliphatischen $C_1$-$C_6$-Carbonsäuren mit der Maßgabe, daß diese partiellen Ester noch mindestens 2 freie Hydroxylgruppen tragen.

EP 0 282 912 A2

## Stabilisierungsmittel für Vinylchloridpolymerisate

Die Erfindung betrifft Stabilisierungsmittel für Vinylchloridpolymerisate, bestehend im wesentlichen aus

A) 20 bis 70 Gew.-% einer Mischung aus einem Zinksalz und einem Erdalkalimetallsalz einer aliphatischen, aromatischen oder araliphatischen $C_7$-$C_{18}$-Carbonsäure, wobei das Verhältnis von Zinksalz zu Erdalkalimetallsalz 1:1 bis 2,5:1 beträgt,

B) 25 bis 50 Gew.-% eines Isocyanurates

und

C) 5 bis 30 Gew.-% eines 3-bis 6-wertigen, nicht aromatischen Alkohols mit bis zu 10 C-Atomen, ausgenommen Derivate des Isocyanurates, oder von Homokondensationsprodukten dieser Alkohole oder von Cokondensationsprodukten dieser Alkohole untereinander oder mit aliphatischen $C_2$-$C_6$-Dicarbonsäuren oder aromatischen $C_8$-Dicarbonsäuren, wobei der Kondensationsgrad bis zu 10 beträgt und mindestens zwei freie Hydroxylgruppen vorhanden sind, oder partielle Ester dieser Alkohole bzw. der Kondensationsprodukte mit aliphatischen $C_1$-$C_6$-Carbonsäuren mit der Maßgabe, daß diese partiellen Ester noch mindestens 2 freie Hydroxylgruppen tragen.

Weiterhin betrifft die Erfindung Vinylchloridpolymerisate, die mit solchen Stabilisierungsmitteln stabilisiert sind.

Chlorhaltige Polymere, wie Polyvinylchlorid (PVC), zersetzen sich bei höheren Temperaturen unter HCl-Abspaltung und Bildung von dunkel gefärbten Abbauprodukten. Da die thermoplastische Verarbeitung von PVC höhere Temperaturen (ca. 160 bis 200°C) erfordert, ist der Zusatz geeigneter Thermostabilisatoren zur PVC-Masse erforderlich, um Zersetzung bzw. Verfärbung zu verhindern.

Sind diese Polymeren der Witterung ausgesetzt, ist zusätzlich eine dauerhafte Stabilisierung des PVC's gegen Licht und Wetter erforderlich.

Für bedeutende Einsatzgebiete von PVC, wie Rohre und Profile, werden blei-und/oder cadmiumhaltige Stabilisatoren bevorzugt. Beide, diesen Stabilisatoren zugrunde liegende Schwermetalle, sind toxisch. Dies bringt sowohl bei der Stabilisatorherstellung als auch bei der PVC-Verarbeitung und Entsorgung beträchtliche Probleme mit sich.

Eine Möglichkeit, diesen Nachteilen auszuweichen, sind Stabilisatoren auf Basis Calcium/Zink. Die Wirksamkeit eines solchen Stabilisators beruht zu einem wesentlichen Teil auf der gegenseitigen Wirkungsverstärkung von "Primärstabilisatoren" und Costabilisatoren (Synergismus). Als Primärstabilisatoren gelten Fettsäuresalze der genannten Metalle, während als Costabilisatoren z.B. sterisch gehinderte Phenole, Phosphorigsäureester, epoxidierte Öle, organische Schwefelverbindungen, β-Diketone oder Polyole verwendet werden.

So ist aus der FR-A 2 403 362 bekannt, Weich-PVC für Kabelisolierungen mit einer Mischung aus Calcium-und Zinkfettsäuresalzen, Sorbit und einem β-Diketon zu stabilisieren. Die Verwendbarkeit der Stabilisierungsmittel ist beschränkt auf weich gemachtes bzw. weichmacherhaltiges PVC. Eine ähnliche Zusammensetzung ist aus der DE-A 27 28 865 und der DE-A 27 28 862 bekannt, in denen statt Sorbit auch Xylit oder Mannit als Polyolkomponente empfohlen werden.

Aus der JP-A 76/074043 waren Calcium-und Zinkfettsäuresalze zusammen mit tris(2-Hydroxyethyl)-isocyanurat bekannt, gemäß der JP-A 80/023121 kann ein Stabilisierungsmittel zusätzlich Metallsalze von β-Diketonverbindungen enthalten, gemäß der JP-A 79/154441 oder der JP-A 80/009664 stattdessen Salze ausgewählter Metalle. Ebenso waren Stabilisierungsmittel aus Calcium-und Zinkfettsäuresalzen mit α-Acyllactonen aus der DE-A 26 45 870 oder mit β-Diketonverbindungen aus der DE-A 26 00 516 bekannt.

Diese Mittel sind jedoch unbefriedigend, da sie nicht zu einer ausgewogenen Stabilisierung führen. Zum Teil reicht der Schutz gegen eine starke Verfärbung des Werkstoffes nicht aus, so daß diese zu schnell eintritt (Langzeitstabilität). Zum Teil können die Mittel eine frühzeitige Vergilbung (Anfangsverfärbung) nur ungenügend verhindern, was sich insbesondere bei hell eingefärbten Formteilen nachteilig auswirkt. Zum Teil schützen die Mittel den Werkstoff, der zum Beispiel zu einem Fensterprofil geformt ist, nicht ausreichend gegen Licht-und Wettereinflüsse, insbesondere bei länger andauernder Exposition.

Aufgabe der vorliegenden Erfindung war es daher, unter Vermeidung der genannten Nachteile Stabilisierungsmittel bereitzustellen, die eine hohe Langzeitstabilität zusammen mit einer geringen Anfangsverfärbung bei guter Licht-und Wetterbeständigkeit gewährleisten. Sie sollen wirtschaftlich herstellbar sein und gut in Vinylchloridpolymerisaten verteilbar sein, ohne die Eigenschaften der daraus hergestellten Formteile zu beeinträchtigen.

Demgemäß wurden die eingangs definierten Stabilisierungsmittel sowie bevorzugte Stabilisierungsmittel gemäß der Unteransprüche gefunden.

Als wesentliche Komponente A) enthält das Stabilisierungsmittel 20 bis 70, bevorzugt 30 bis 54 Gew.-

%, bezogen auf das Stabilisierungsmittel, eines Gemisches aus Zink-und Erdalkalimetallsalzen, bevorzugt Barium-und insbesondere Calciumsalzen, von aliphatischen, aromatischen oder araliphatischen $C_7$-$C_{18}$-Carbonsäuren. Als Säurekomponente werden aliphatische $C_{12}$-$C_{18}$-Carbonsäuren, die gesättigt oder ein-oder mehrfach ungesättigt sein können, oder aromatische oder araliphatische $C_7$-$C_9$-Carbonsäuren bevorzugt. Selbstverständlich können auch Mischungen von Salzen verschiedener Säuren verwendet werden.

Beispielsweise seien genannt: 2-Ethylhexansäure, Laurinsäure, Myristinsäure Palmitinsäure, Stearinsäure, Ölsäure, Linolensäure oder Benzoesäure. Wesentlich ist es, das Gewichtsverhältnis zwischen Zink-und Erdalkalisalzen zwischen 1:1 bis 2,5:1, insbesondere 1,6:1 bis 2,5:1, zu halten. Bei einem zu geringen Gehalt an Zinksalzen besteht die Gefahr, daß die Licht-und Wetterbeständigkeit des stabilisierten Formteils insbesondere beim Außeneinsatz leidet, andererseits verschlechtert sich bei zu großer Menge an Zinksalzen die Eigenschaftskombination Langzeitstabilität und geringe Anfangsverfärbung aufgrund des sich intermediär bildenden Zinkchlorides, das auch durch große Polyolmengen nicht mehr neutralisierbar ist. Es haben sich daher insbesondere eine Kombination aus 26 bis 30 Gew.-% Zinksalz und 12 bis 16 Gew.-%, jeweils bezogen auf das Stabilisierungsmittel, Erdalkalisalz bewährt.

Als Komponente B) werden 25 bis 50, bevorzugt 33 bis 45, insbesondere 35 bis 39 Gew.-%, bezogen auf das Stabilisierungsmittel, eines Isocyanurates verwendet. Bevorzugt wird eine Verbindung der allgemeinen Formel I

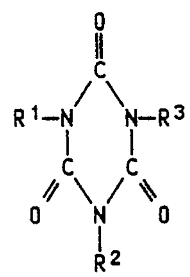

(I),

wobei $R^1$, $R^2$ und $R^3$ aliphatische Reste mit bis zu 6 C-Atomen sind. Bevorzugt sind $C_1$-$C_4$-Alkyl-, $C_1$-$C_4$-Alkoxy-, $C_2$-$C_4$-Alkenyl-und $C_2$-$C_4$-Alkenyloxygruppen. Diese können durch eine Hydroxyl-, Carboxyl-oder Oxiranylgruppe substituiert sein. Beispiele für einzelne Reste sind $-CH_2-CH_2-COOH$,

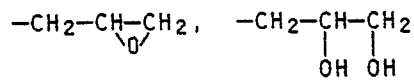

oder $-CH_2-CH=CH_2$ , bevorzugt werden die Methoxy-und Ethoxygruppe.

Als besonders bevorzugtes Beispiel für B) sei tris-(2-Hydroxyethyl)-isocyanurat genannt.

Die Komponente C) wird in Mengen von 5 bis 30, bevorzugt 13 bis 25, insbesondere 19 bis 23 Gew.-%, bezogen auf das Stabilisierungsmittel, eingesetzt. Es kann ein 3-bis 6-wertiger, nicht aromatischer Alkohol mit bis zu 10 C-Atomen, ausgenommen Derivate des Isocyanurates, verwendet werden. Dabei kann es sich um Sorbit, Xylit, Mannit, Trimethylolpropan, Trimethylolethan, Tetramethylolcyclohexanol, Glycerin oder insbesondere Pentaerythrit handeln. Es kann sich auch um Homokondensationsprodukte dieser Alkohole, bevorzugt Pentaerythrit, oder um deren Cokondensationsprodukte untereinander oder mit aliphatischen $C_2$-$C_6$-Dicarbonsäuren, insbesondere $C_4$-$C_6$-Dicarbonsäuren oder aromatischen $C_8$-Dicarbonsäuren handeln. Als Beispiele seien Diglycerin oder die Cokondensationsprodukte von Pentaerythrit mit Glycerin oder Trimethylolpropan genannt. Der Kondensationsgrad dieser Produkte soll nicht über 10 liegen und es müssen mindestens zwei, bevorzugt vier freie Hydroxylgruppen vorhanden sein. Weiterhin kann es sich um partielle Ester dieser Alkohole bzw. Kondensationsprodukte mit mindestens zwei, bevorzugt drei freien Hydroxylgruppen mit aliphatischen $C_1$-$C_6$-Carbonsäuren handeln. Bevorzugt werden Pentaerythritmonoester mit einer aliphatischen $C_1$-$C_4$-Carbonsäure wie Ameisensäure, Essigsäure oder Propionsäure.

Die Stabilisierungsmittel können durch Vermischen der gegebenenfalls gemahlenen Komponenten in üblichen Mischapparaturen nach bekannten Verfahren hergestellt werden. Es hat sich in manchen Fällen als günstig erwiesen, die Einsatzstoffe, insbesondere Komponente C, in möglichst feinkörniger Form einzusetzen, um eine innige Vermischung zu erreichen.

Ist die Komponente C Pentaerythrit, so kann es von Vorteil sein, wenn das Produkt praktisch keine Teilchen mit einem Durchmesser von mehr als 60 µm enthält, was zum Beispiel mit mikroskopischen

Aufnahmen des Pulvers überprüft werden kann. Bevorzugt werden in solchen Fällen Pentaerythritpulver mit Teilchendurchmessern von 0,1 bis 50 µm.

Die erfindungsgemäßen Stabilisierungsmittel eignet sich für die Stabilisierung von Vinylchloridpolymerisaten gegen Einflüsse von Licht und Wärme. Besonders vorteilhaft werden sie für Formteile aus nicht weichgemachtem Vinylchloridpolymerisat, die der normalen Witterung ausgesetzt sind, verwendet.

Als Vinylchloridpolymerisate kommen die üblichen Homo-und Copolymerisate des Vinylchlorids, beispielsweise mit bis zu 30 Gew.-% Vinylidenchlorid, Vinylester, Acrylester, Acrylnitril oder Olefinen in Frage. Bevorzugt wird ein Vinylchloridhomopolymerisat mit einem K-Wert nach Fikentscher zwischen 50 und 100 verwendet, hergestellt durch Polymerisation in wäßriger Suspension oder Emulsion oder in Masse, gegebenenfalls unter Zusatz von schlagzäh modifizierenden Kautschuken, wie Styrol-oder Acrylatpolymerisate. Den Polymeren können übliche Zusätze wie Antioxidantien, UV-Stabilisatoren und Zusätze, die die Verarbeitung erleichtern, beispielsweise Gleitmittel, oder anderer Stabilisierungsmittel wie epoxidiertes Sojabohnenöl oder Ester der phosphorigen Säure wie Diphenyldecylphosphit zugesetzt sein, vorausgesetzt, daß die günstigen Wirkungen der erfindungsgemäßen Stabilisierungsmittel nicht beeinträchtigt werden.

Gegebenenfalls können dem Vinylchloridpolymerisat gebräuchliche Weichmacher oder Plastifiziermittel zugesetzt sein. Derartige Weichmacher werden in "Encyclopädie of Polymer Sciences and Technology", Bd. 14, Seiten 396-400, Interscience Publishers 1971, beschrieben; es handelt sich im wesentlichen um Phthalate, Phosphate, Ester von aliphatischen Dicarbonsäuren oder gegebenenfalls Polyester.

Es ist bemerkenswert, daß die erfindungsgemäßen Stabilisierungsmittel auch beim ansonsten schwierig zu stabilisierendem Hart-PVC gute Erfolge erzielen.

Die Stabilisierungsmittel können dem Vinylchloridpolymerisat in Mengen von 0,05 bis 10, bevorzugt 1 bis 5 Gew.-%, bezogen auf das Vinylchloridpolymerisat, zugesetzt sein. Das Einmischen kann nach bekannten Verfahren erfolgen. Beispielsweise wird die Homogenisierung der Mischung in einem Kneter oder einem Walzenmischer vorgenommen und dabei bei einer Temperatur gearbeitet, daß die Mischung fließfähig ist. Dies erleichtert den Mischvorgang. Die stabilisierten Polymerisate lassen sich mit Hilfe aller für die Ver-oder Bearbeitung von PVC-Formmassen gebräuchlichen Arbeitsweisen weiterverarbeiten, insbesondere Strangpressen oder Formpressen, daneben auch Blasspritzen, Kalandrieren, Rotations-oder Schleudergießen.

Die erfindungsgemäßen Stabilisierungsmittel können in einfacher Weise aus wirtschaftlich gut zugänglichen Rohstoffen hergestellt werden. Sie ermöglichen eine ausgewogene und vorteilhafte Kombination von Langzeitstabilität, günstiger Anfangsfärbung und Licht-und Wetterbeständigkeit, insbesondere bei Verwendung in Formteilen aus nicht weichgemachten Vinylchloridpolymerisaten, die der Witterung ausgesetzt sind. Die Stabilisierungsmittel sind gut in Vinylchloridpolymerisaten verteilbar, ohne die Eigenschaften der daraus hergestellten Formteile zu beeinträchtigen.

Beispiele 1 und 2

Die fein pulverisierten Bestandteile der in Tabelle 1 angegebenen Stabilisierungsmittel wurden in einem Laborschnellmischer vermischt.

35 g des so erhaltenen Stabilisierungsmittels wurden mit 4g Diphenyldecylphosphit und 1 kg Polyvinylchlorid, hergestellt im Suspensionsverfahren mit einem K-Wert nach Fikentscher von 65, (Vinoflex® S 6514 (® = eingetragenes Warenzeichen der Firma BASF Aktiengesellschaft)) abgemischt und auf einem Zweiwalzwerk 10 Minuten bei 180°C plastifiziert.

An den Walzfellen wurden die Anfangsverfärbung und die Langzeitstabilität durch übliche Ofenlagerung bei 180°C untersucht. Die Anfangsverfärbung wurde nach 20 bis 30 Minuten Ofenlagerung visuell bestimmt.

Als Langzeitstabilität wurde die Dauer der Ofenlagerung bis zur schwarzbraunen Verfärbung der Walzfelle angegeben.

Die Ergebnisse sind in Tabelle 1 dargestellt.

Tabelle 1

| | Stabilisierungsmittel Beispiel 1 | Beispiel 2 |
|---|---|---|
| Zinklaurat | 28,6 | 30 |
| Calciumlaurat | 14,3 | 15 |
| tris-(2-Hydroxyethyl)-isocyanurat | 38,1 | 35 |
| Pentaerythrit | 19,0 | 20 |
| Anfangsverfärbung | sehr gering | sehr gering |
| Langzeitstabilität [min] | 85 | 75 |

**Ansprüche**

1. Stabilisierungsmittel für Vinylchloridpolymerisate, bestehend im wesentlichen aus

A) 20 bis 70 Gew.-% einer Mischung aus einem Zinksalz und einem Erdalkalimetallsalz einer aliphatischen, aromatischen oder araliphatischen $C_7$-$C_{18}$-Carbonsäure, wobei das Verhältnis von Zinksalz zu Erdalkalimetallsalz 1:1 bis 2,5:1 beträgt,

B) 25 bis 50 Gew.-% eines Isocyanurates

und

C) 5 bis 30 Gew.-% eines 3-bis 6-wertigen, nicht aromatischen Alkohols mit bis zu 10 C-Atomen, ausgenommen Derivate des Isocyanurates, oder von Homokondensationsprodukten dieser Alkohole oder von Cokondensationsprodukten dieser Alkohole untereinander oder mit aliphatischen $C_2$-$C_6$-Dicarbonsäuren oder aromatischen $C_8$-Dicarbonsäuren, wobei der Kondensationsgrad bis zu 10 beträgt und mindestens zwei freie Hydroxylgruppen vorhanden sind, oder partielle Ester dieser Alkohole bzw. der Kondensationsprodukte mit aliphatischen $C_1$-$C_6$-Carbonsäuren mit der Maßgabe, daß diese partiellen Ester noch mindestens 2 freie Hydroxylgruppen tragen.

2. Stabilisierungsmittel nach Anspruch 1, bestehend im wesentlichen aus 30 bis 54 Gew.-% A), 33 bis 45 Gew.-% B) und 13 bis 25 Gew.-% C).

3. Stabilisierungsmittel nach den Ansprüchen 1 bis 2, enthaltend als Erdalkalimetallsalz der Komponente A) ein Calcium-oder Bariumsalz.

4. Stabilisierungsmittel nach den Ansprüchen 1 bis 3, enthaltend als Komponente A) Salze von aliphatischen $C_{12}$-$C_{18}$-Carbonsäuren oder von aromatischen oder araliphatischen $C_7$-$C_9$-Carbonsäuren.

5. Stabilisierungsmittel nach den Ansprüchen 1 bis 4, enthaltend als Komponente B) ein Isocyanurat der allgemeinen Formel I

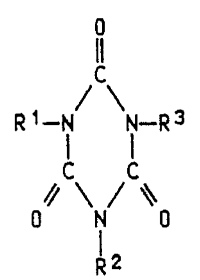

wobei $R^1$, $R^2$ und $R^3$ aliphatische Reste mit bis zu 6 C-Atomen sind.

6. Stabilisierungsmittel nach den Ansprüchen 1 bis 5, enthaltend als Komponente B) tris-(2-Hydroxyethyl)-isocyanurat.

7. Stabilisierungsmittel nach den Ansprüchen 1 bis 6, enthaltend als Komponente C) Pentaerythrit oder Pentaerythritmonoester einer aliphatischen $C_1$-$C_4$-Carbonsäure.

8. Vinylchloridpolymerisate oder diese Polymerisate enthaltende Massen, enthaltend 0,05 bis 10 Gew.-%, bezogen auf den Anteil an Vinylchloridpolymerisaten, eines Stabilisierungsmittels gemäß den Ansprüchen 1 bis 7.